# FASCICULE DE BREVET EUROPEEN

(11) **EP 2 647 318 B1**
(45) Date de publication et mention de la délivrance du brevet: **21.05.2014**
(21) Numéro de dépôt: 13159915.1
(22) Date de dépôt: 19.03.2013
(51) Int. Cl.: A47J 31/36

(54) **Dispositif à piston pour liquide alimentaire, son procédé de fonctionnement et machine de percolation ainsi pourvue**
Ventilvorrichtung für flüssige Lebensmittel, ihr Funktionsverfahren und eine damit ausgestattete Kaffeeausgabemaschine
Piston device for liquid food, operating method thereof and brewing machine provided with the same

(30) Priorité: 05.04.2012 FR 1253142
(43) Date de publication de la demande: 09.10.2013
(73) Titulaire: SEB SA, 69130 Ecully (FR)
(72) Inventeur: Morin, Gilles, 21490 Varois et Chaignot (FR); Turpin, Romain, 14210 Saint Honorine du Fay (FR)
(74) Mandataire: Novagraaf Technologies

(56) Documents cités:
- EP-A1- 1 719 440
- WO-A1-2010/100600
- DE-A1-102010 008 201
- US-A1- 2006 254 428

## Description

L'invention concerne le domaine de la fourniture de liquide par l'intermédiaire d'un dispositif à piston où circule, ou peut circuler, un liquide alimentaire ou compatible alimentaire.

Est ainsi concerné un tel dispositif à piston. Le sont aussi une machine de percolation pourvue de ce dispositif et un procédé de fonctionnement du dispositif à piston ou de la machine.

Dans le texte, un liquide alimentaire est un liquide que l'on peut boire sans conséquence avérée pour la santé humaine. Un liquide compatible alimentaire est un liquide qui, s'il n'est pas prévu normalement pour être consommé par l'homme, n'est pas censé altérer sa santé s'il est ingéré. Un liquide de nettoyage interne d'un appareil de petit électroménager, par exemple légèrement acide, peut convenir.

Dans le domaine ci-avant cité, on connaît des dispositifs à piston comprenant un piston, une chemise où coulisse le piston, lequel fait varier le volume d'une chambre et est pourvu, vers une extrémité avant, d'un joint périphérique et de moyens d'apport de liquide reliés à une source de liquide pour apporter ce liquide frontalement dans la chambre.

WO2010079298 et EP 1719440 en sont un exemple.

Un problème qui se pose est toutefois que dans le temps la qualité de l'étanchéité de la zone du joint et du racleur peut s'altérer. Suivant ce qui se trouve dans la chambre, il peut y avoir des résidus dans cette zone, ce qui n'est favorable ni à la propreté, ni à l'étanchéité, ni au bon fonctionnement d'ensemble.

Une solution proposée est que ledit dispositif à piston comprenne, entre l'extrémité et le joint, un racleur comprenant au moins un orifice communiquant avec la chambre et réservant en périphérie du piston, vers l'avant du joint, au moins un espace creux, permettant ainsi à du liquide provenant de la chambre de circuler entre le racleur et le joint.

On doit ainsi limiter le risque d'usure prématurée et de perte d'élasticité du joint dans le temps. L'utilisateur doit par ailleurs avoir moins d'effort à fournir, par exemple si un levier est à actionner pour faire coulisser le piston.

Un problème corollaire du précédent concerne l'efficacité de circulation dudit liquide et la compacité du piston.

Une solution proposée est que, le piston coulissant traditionnellement dans la chemise suivant un axe, plusieurs dits orifices soient prévus, de telle sorte :
- qu'ils s'étendent essentiellement radialement audit axe, en plusieurs emplacements répartis autour de l'axe,
- et qu'ils s'ouvrent en face frontale du racleur et en périphérie de celui-ci où ils communiquent chacun avec un dit espace creux.

Sous un aspect potentiellement complémentaire, il est proposé que le racleur soit maintenu sur le piston par les moyens d'apport de liquide qui comprennent un disque monté à ladite extrémité et que le joint soit maintenu par le racleur sur le piston.

Ainsi, l'interaction entre joint et racleur est favorisée.

La délivrance d'un café à boire étant en particulier visée, et plus généralement les problèmes d'encrassement pouvant être d'autant plus critiques que la substance dans la chambre a une capacité de colmatation, il est prévu que la chambre puisse renfermer une substance émiettée ou granulaire (telle poudreuse) que comprime le piston.

Même dans ce(s) cas, les problèmes précités de défaut de propreté, d'étanchéité, ou de fonctionnement d'ensemble altéré ne doivent pas se poser notablement.

Pour favoriser la distribution de liquide (typiquement de l'eau chaude) dans la chambre frontale et donc a priori une moindre tendance à dispersion en périphérie du piston, vers le joint, il est conseillé que les moyens d'apport de liquide comprennent des passages répartis frontalement sur ladite extrémité du piston à la manière d'une douchette.

Par ailleurs, pour l'efficacité et la facilité de montage du joint et du racleur, ainsi que pour l'étanchéité de la zone du joint, on recommande que le joint soit un joint à lèvre dans un creux périphérique frontal duquel s'engage le racleur.

Est donc également concernée une machine de percolation pourvue du dispositif qui vient d'être présenté, avec tout ou partie de ses caractéristiques.

Dans l'application privilégiée d'une machine à café, la chambre renfermera une mouture.

Ainsi, on empêchera les granulés de café broyé/moulu de se loger entre le racleur et le joint. On évitera l'encrassement dans cette zone par accumulation de mouture.

Pour encore limiter le risque d'usure prématurée et de perte d'élasticité du joint dans le temps, il est aussi proposé que le dispositif à piston ou la machine précité(s) fonctionne(nt) comme suit, en situation d'entretien :
- au moins localement, on fait sortir le piston de la chemise, de sorte que le joint périphérique ne soit plus comprimé par cette chemise,
- et on fait passer de l'eau chaude vers le joint.

D'autres caractéristiques et avantages apparaîtront encore de la description, non limitative, d'un mode de réalisation qui suit, en référence aux dessins annexés où :
- les figures 1, 2 montrent une machine à café, la figure 2 avec arrachement,
- la figure 3 montre en coupe axiale longitudinale l'intérieur du dispositif,
- la figure 4 montre l'avant du dispositif avec le racleur, piston sorti de la chemise et sans la douchette frontale,
- la figure 5 montre le racleur, seul,
- les figures 6, 7 montrent le joint et le racleur, ainsi que le circuit de liquide (voir les flèches figure 7) provenant de la chambre et qui circule donc entre eux pour aboutir dans la chambre, en avant du piston.

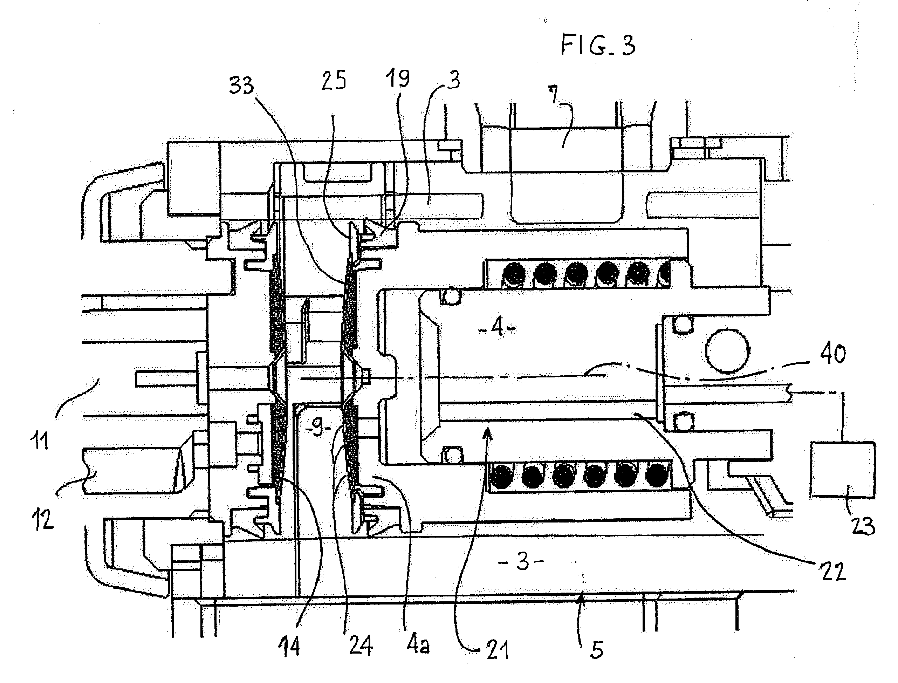

Figure 3 notamment, on voit un dispositif 1 à piston, où circule un liquide alimentaire ou compatible alimentaire.

Il s'agit dans ce cas d'un dispositif appartenant à une machine à café 20.

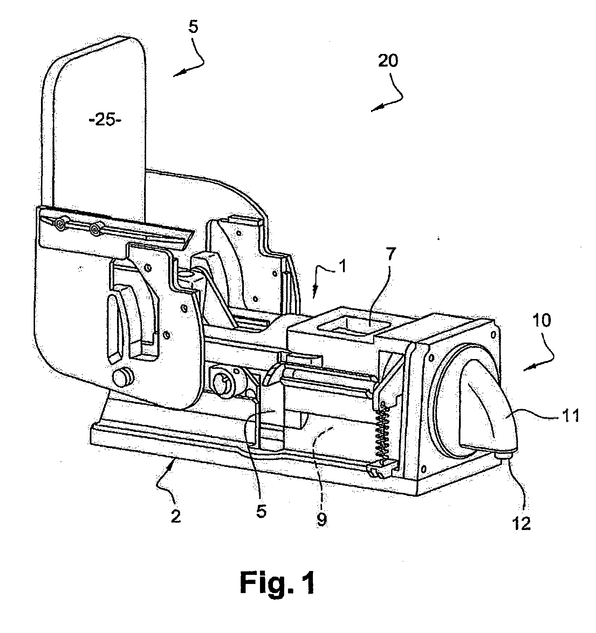

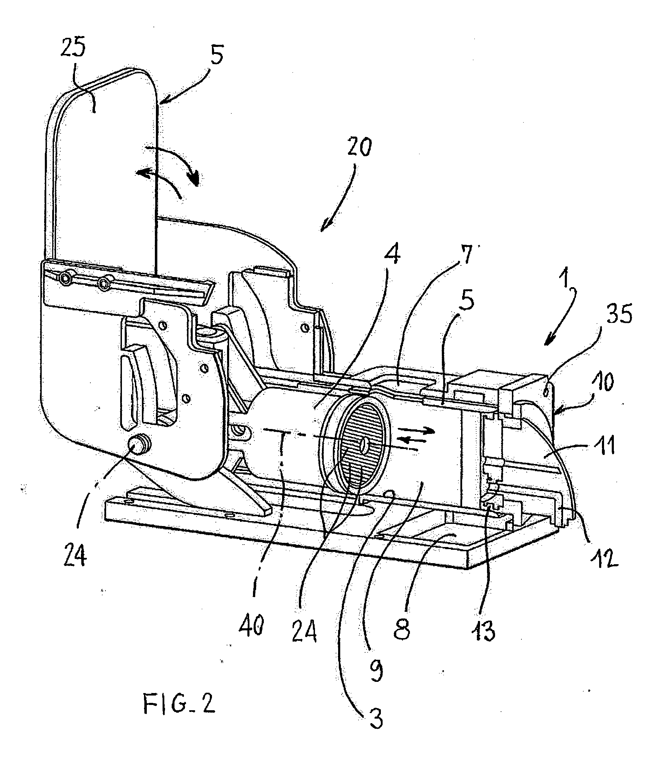

Figures 1, 2, on voit que la machine 20 comprend un socle 2, une chemise 3, un piston 4 mobile par rapport à la chemise 3 et un organe d'activation 5 mobile par rapport au socle 2, à la chemise 3 et au piston 4.

Le corps 5 du socle 2 définit intérieurement la chemise 3.

La chemise 3 délimite une chambre 9 (ici de forme cylindrique) dans laquelle le piston est monté axialement coulissant (axe 40). Ce mouvement de translation est son seul degré de liberté.

La machine 20 est ici une machine de percolation pour de la mouture de café en vrac. Ainsi, dans cet exemple, la chambre 9 renferme une substance émiettée ou granulaire que comprime le piston.

La chambre 9 est accessible de l'extérieur par une ouverture supérieure d'introduction 7 par laquelle la substance à percoler, ici donc de la mouture de café, peut être introduite, et une ouverture inférieure d'expulsion 8 par laquelle la mouture usagée peut sortir de la chambre. Une tête de tassage 10 délimite axialement et frontalement la chambre 9, à l'opposé du piston 4. La tête de tassage 10 est fixée frontalement au corps 5.

Cette tête de tassage 10 comprend un embout 11 qui obstrue l'ouverture axiale de ce dernier. L'embout 11 comporte, d'une part, une conduite d'évacuation de boisson 12 qui le traverse et qui permet la sortie du café liquide obtenu par percolation, et, d'autre part, une rainure périphérique dans laquelle est monté un joint d'étanchéité 13. Intérieurement, face au piston 4, la tête de tassage 10 comprend également un filtre (ici à café) 14 fixé contre l'embout 11 et qui forme la limite axiale frontale de la chambre 9.

L'organe d'activation 5 est adapté à entraîner le mouvement du piston 4.

En l'occurrence, l'organe d'activation 5 comprend un levier 25 monté en rotation par rapport au socle 2 autour d'un arbre principal 24 (ici, fixe) situé à l'opposé de la tête de tassage 10.

Mû par l'organe d'activation 5, le piston 4 fait, en coulissant, varier le volume de la chambre 9.

Figures 3 et suivantes, l'avant où est située l'extrémité frontale du piston et par où la boisson sort de la chambre 9, est à gauche, alors qu'il est à droite figures 1, 2.

Figure 3 notamment, on voit qu'à sa périphérie, le piston 4 est pourvu, vers son extrémité avant 4a, d'un joint d'étanchéité périphérique 19. Il est également pourvu de moyens 21 d'apport de liquide reliés à une source de liquide, symbolisée 23, pour apporter ce liquide ici axialement dans la chambre 9. La source 23 est a priori logée ailleurs dans la machine et peut appartenir au dispositif 1.

Les moyens d'apport de liquide 21 permettent, dans l'exemple, d'injecter de l'eau sous pression, pour réaliser la boisson attendue, ici du café. Les moyens d'apport de liquide 21 peuvent comprendre un passage 22 parallèle à l'axe de coulissement du piston.

A son extrémité avant 4a venant en contact avec la mouture et qui est sa surface axiale frontale, le piston 4 se termine face à la chambre 9 par une surface de compression 18.

Pour l'apport du liquide dans la chambre, les moyens d'apport de liquide 21 comprennent aussi un ou plusieurs passages 24 qui traversent cette surface axiale frontale et communiquent d'un côté avec le passage (ici axial) 22 et de l'autre avec la chambre 9.

Pour favoriser une bonne qualité de boisson, ici un mouillage favorablement uniforme de la substance à percoler, et répartir la pression, on a prévu que les passages 24 soient répartis frontalement sur toute l'extrémité frontale du piston à la manière d'une douchette.

Entre l'extrémité 4a et le joint 19, le piston 4 comprend en outre un racleur 25.

Le racleur 25 comprend au moins un orifice 27 communiquant avec la chambre 9 et réservant en périphérie du piston, vers l'avant du joint 19, au moins un espace creux 29, permettant ainsi à du liquide provenant de la chambre de circuler entre le racleur 25 et le joint.

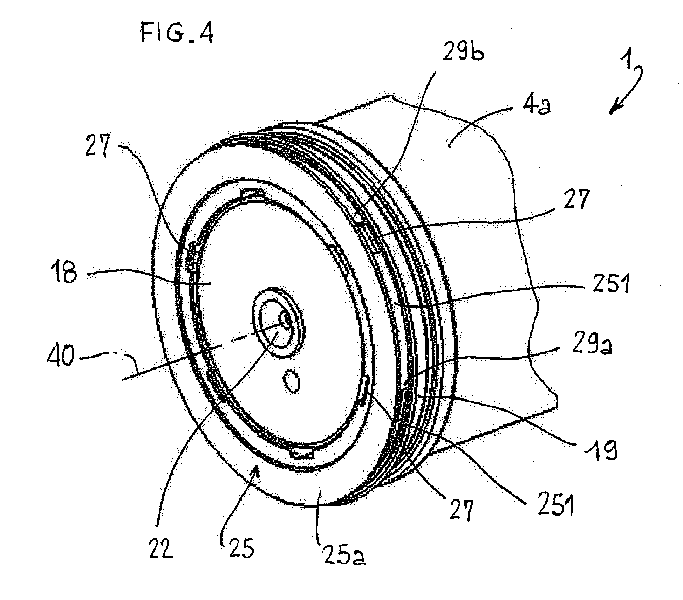

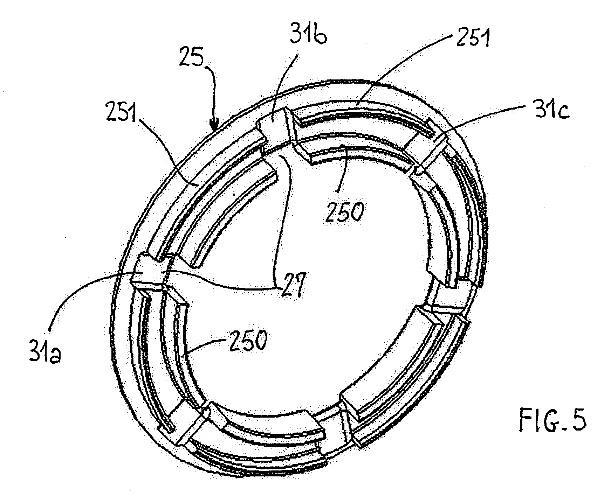

Favorablement, et comme illustré figures 4, 5, plusieurs orifices 27 sont prévus :
- qui s'étendent essentiellement radialement à l'axe 40 de coulissement du piston, en plusieurs emplacements 31a,31b,31c... répartis autour de l'axe,
- et qui s'ouvrent en face frontale 25a du racleur et en périphérie de celui-ci où ils communiquent chacun avec un dit espace creux, tel 29a, 29b, respectivement, figure 4.

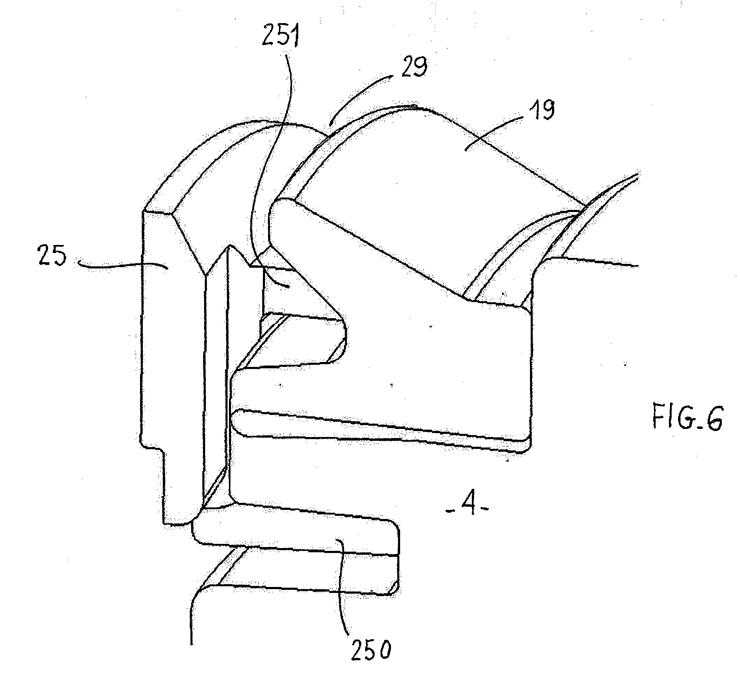

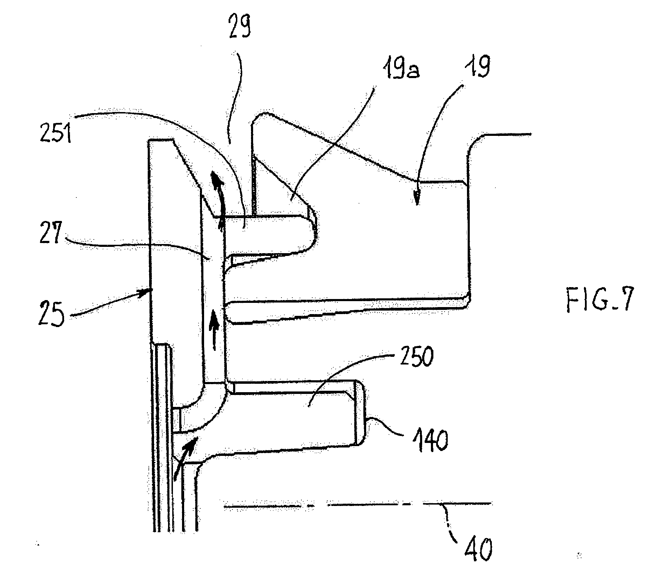

Sur les figures 6,7, on distingue que, comme préféré, le joint 19 est un joint à lèvre dans un creux périphérique frontal 19a duquel s'engage le racleur 25.

Figure 3, on constate que le racleur 25 est maintenu sur le piston 4 par les moyens 21 d' apport de liquide. Plus précisément, ces moyens 21 comprennent favorablement pour cela un disque 33 monté à ladite extrémité avant 4a et le joint 19 est maintenu par le racleur 25 sur le piston.

Le disque 33 sera favorablement, comme dans la version illustrée, traversé axialement par les passages 24 de manière à former la structure de la douchette précitée.

Pour maintenir le joint 19, on voit figures 6, 7 que le racleur 25 présente une première excroissance arrière 250 annulaire (ici continue) qui s'engage étroitement (avec frottement) dans une fente frontale 140 du piston et une deuxième excroissance arrière 251 qui s'engage dans le creux frontal 19a du joint.

La deuxième excroissance 251 peut être formée de plusieurs tronçons annulaires successifs, comme montré figures 4 et 5.

Ainsi conçu, et en particulier dans cette version illustrée, le dispositif 1 à piston va permettre de fiabiliser efficacement la machine de percolation sur laquelle on pourra le monter.

On aura compris de ce qui précède que l'/les orifice(s) du (joint) racleur permet(tent) la circulation de l'eau provenant de la douchette, tandis que le joint à lèvre permet d'assurer l'étanchéité entre le piston et la chemise. L'eau (typiquement chaude, a priori plus de 70°C) qui provient du piston presseur peut circuler entre le (joint) racleur et le joint à lèvre. S'il s'agit d'une mouture de café, ces moyens permettent d'empêcher les grains de café de se loger entre le racleur et le joint à lèvre. On évite ainsi l'encrassement, par une accumulation de mouture de café, entre le racleur et le joint à lèvre. Ceci permet à l'utilisateur de fournir moins d'effort pour actionner le levier actionnant le piston, et d'éviter une usure prématurée du joint qui perd de son élasticité.

Pour les raisons déjà évoquées, et aussi libérer d'éventuelles particules de la substance émiettée ou granulaire placée dans la chambre 9, et qui pourraient malgré tout se loger entre le racleur 25 le joint 19, il est aussi proposé que le dispositif à piston ou la machine précité(s) fonctionne (nt) comme suit, en situation d'entretien :
- on fait sortir au moins localement le piston 4 de la chemise 3, de sorte que le joint périphérique 19 ne soit au moins localement plus comprimé (ou soit moins comprimé) par cette chemise,
- et on fait passer de l'eau chaude vers le joint.

Pour faire ainsi sortir le piston 4, on le déplace suivant 1`axe 40, par exemple en le reculant jusqu'à ce que le joint périphérique 19 soit sous l'ouverture 7, comme montré figure 3.

## Revendications

1. Dispositif (1) à piston où circule un liquide alimentaire ou compatible alimentaire, le dispositif comprenant un piston (4), une chemise (3) où coulisse le piston (4), lequel fait varier le volume d'une chambre (9) et est pourvu, vers une extrémité avant (4a), d'un joint périphérique (19) et de moyens d'apport de liquide (21) reliés à une source de liquide (23) pour apporter ce liquide frontalement dans la chambre (9), le dispositif (1) comprenant, entre l'extrémité (4a) et le joint (19), un racleur (25), **caractérisé en ce que** le racleur (25) comprend au moins un orifice (27) communiquant avec la chambre (9) et réservant en périphérie du piston (4), vers l'avant du joint (19), au moins un espace creux (29a, 29b, 29c), permettant ainsi à du liquide provenant de la chambre (9) de circuler entre le racleur (25) et le joint (19).

2. Dispositif (1) selon la revendication 1, **caractérisé en ce que** le piston (4) coulisse dans la chemise (3) suivant un axe (40) et plusieurs orifices (27) sont prévus :
- qui s'étendent essentiellement radialement audit axe (40), en plusieurs emplacements répartis autour de l'axe,
- et qui s'ouvrent en face frontale (25a) du racleur (25) et en périphérie de celui-ci où ils communiquent chacun avec un dit espace creux (29a, 29b, 29c).

3. Dispositif (1) selon l'une des revendications 1, 2, **caractérisé en ce que** la chambre (9) renferme une substance émiettée ou granulaire que comprime le piston (4).

4. Dispositif selon l'une des revendications 1 à 3, **caractérisé en ce que** le racleur (25) est maintenu sur le piston (4) par les moyens d'apport de liquide (21) qui comprennent un disque (33) monté à ladite extrémité avant (4a) et le joint (19) est maintenu par le racleur (25) sur le piston (4).

5. Dispositif selon l'une des revendications 1 à 4, **caractérisé en ce que** les moyens d'apport de liquide (21) comprennent des passages (24) répartis frontalement sur ladite extrémité (4a) du piston (4) à la manière d'une douchette.

6. Dispositif selon l'une des revendications 1 à 5, **caractérisé en ce que** le joint est un joint à lèvre (19) dans un creux périphérique frontal duquel s'engage le racleur (25).

7. Machine (20) de percolation pourvue du dispositif (1) selon l'une des revendications 1 à 6.

8. Machine (20) selon la revendication 7, **caractérisé en ce que** la chambre (9) renferme une mouture.

9. Procédé de fonctionnement du dispositif (1) à piston selon l'une des revendications 1 à 6 ou de la machine (20) selon la revendication 7 ou 8, **caractérisé en ce qu'**au moins localement:
- on fait sortir le piston (4) de la chemise (3), de sorte que le joint périphérique (19) ne soit plus comprimé par cette chemise (3),
- et on fait passer de l'eau chaude vers le joint (19).

## Patentansprüche

1. Ventilvorrichtung (1), in der eine Lebensmittelflüssigkeit oder eine mit einem Lebensmittel vereinbare Flüssigkeit zirkuliert, wobei die Vorrichtung einen Kolben (4), eine Hülle (3), in der der Kolben (4) gleitet, umfasst, welcher das Volumen einer Kammer (9) variiert und zu einem vorderen Ende (4a) hin mit einer Umfangsdichtung (19) und Mitteln (21) zur Flüssigkeitszuleitung versehen ist, die mit einer Flüssigkeitsquelle (23) verbunden sind, um diese Flüssigkeit von vorne in die Kammer (9) zu leiten, wobei die Vorrichtung (1) zwischen dem Ende (4a) und der Dichtung (19) einen Abstreifer (25) umfasst, **dadurch gekennzeichnet, dass** der Abstreifer (25) mindestens eine Öffnung (27) umfasst, die mit der Kammer (9) in Verbindung steht und an der Peripherie des Kolbens (4) nach vorne zur Dichtung (19) hin mindestens einen Hohlraum (29a, 29b, 29c) ausspart, der es somit einer von der Kammer (9) kommenden Flüssigkeit ermöglicht, zwischen dem Abstreifer (25) und der Dichtung (19) zu zirkulieren.

2. Vorrichtung (1) nach Anspruch 1, **dadurch gekennzeichnet, dass** der Kolben (4) in der Hülle (3) entlang einer Achse (40) gleitet und mehrere Öffnungen (27) vorgesehen sind:
- die sich im Wesentlichen radial zur Achse (40) an mehreren um die Achse verteilten Stellen erstrecken,
- und die sich an der Vorderseite (25a) des Abstreifers (25) und an der Peripherie desselben öffnen, wo sie jeweils mit einem erwähnten Hohlraum (29a, 29b, 29c) in Verbindung stehen.

3. Vorrichtung (1) nach einem der Ansprüche 1 und 2, **dadurch gekennzeichnet, dass** die Kammer (9) eine zerbröckelte oder körnige Substanz einschließt, die den Kolben (4) zusammendrückt.

4. Vorrichtung nach einem der Ansprüche 1 bis 3, **dadurch gekennzeichnet, dass** der Abstreifer (25) auf dem Kolben (4) durch die Mittel (21) zur Flüssigkeitszuleitung gehalten wird, die eine Scheibe (33) umfassen, die am vorderen Ende (4a) montiert ist, und dass die Dichtung (19) von dem Abstreifer (25) auf dem Kolben (4) gehalten wird.

5. Vorrichtung nach einem der Ansprüche 1 bis 4, **dadurch gekennzeichnet, dass** die Mittel (21) zur Flüssigkeitszuleitung Durchgänge (24) umfassen, die frontal auf dem Ende (4a) des Kolbens (4) in der Art einer Handbrause verteilt sind.

6. Vorrichtung nach einem der Ansprüche 1 bis 5, **dadurch gekennzeichnet, dass** die Dichtung eine Lippendichtung (19) ist, in deren frontalen Umfangshohlraum der Abstreifer (25) eingreift.

7. Kaffeeausgabemaschine (20), die mit der Vorrichtung (1) nach einem der Ansprüche 1 bis 6 versehen ist.

8. Maschine (20) nach Anspruch 7, **dadurch gekennzeichnet, dass** die Kammer (9) ein Kaffeepulver einschließt.

9. Funktionsverfahren der Ventilvorrichtung (1) nach einem der Ansprüche 1 bis 6 oder der Maschine (20) nach Anspruch 7 oder 8, **dadurch gekennzeichnet, dass** zumindest lokal:
- der Kolben (4) aus der Hülle (3) ausgefahren wird, so dass die Umfangsdichtung (19) nicht mehr von dieser Hülle (3) zusammengedrückt wird,
- und heißes Wasser zu der Dichtung (19) durchgelassen wird.

## Claims

1. Piston device (1) in which there circulates a food liquid or food-compatible liquid, the device comprising a piston (4), a sleeve (3) in which the piston (4) slides, which piston varies the volume of a chamber (9) and is provided, towards a front end (4a), with a peripheral seal (19) and with liquid supply means (21) connected to a liquid source (23) for supplying this liquid frontally in the chamber (9), the device (1) comprising a scraper (25) between the end (4a) and the seal (19), **characterized in that** the scraper (25) comprises at least an orifice (27) communicating with the chamber (9) and reserves at least an hollow space (29a, 29b, 29c) at the periphery of the piston (4), towards the front of the seal (19), thus allowing liquid coming from the chamber (9) to circulate between the scraper (25) and the seal (19).

2. Device (1) according to Claim 1, **characterized in that** the piston (4) slides in the sleeve (3) along an axis (40) and a plurality of orifices (27) are provided:
- which extend essentially radially to the said axis (40) at a plurality of locations distributed around the axis,
- and which open at the front face (25a) of the scraper (25) and at the periphery thereof where they each communicate with a said hollow space (29a, 29b, 29c).

3. Device (1) according to one of Claims 1 and 2, **characterized in that** the chamber (9) contains a crumbled or granular substance which is compressed by the piston (4).

4. Device according to one of Claims 1 to 3, **characterized in that** the scraper (25) is held on the piston (4) by the liquid supply means (21) which comprise a disc (33) mounted on the said front end (4a) and the seal (19) is held by the scraper (25) on the piston (4).

5. Device according to one of Claims 1 to 4, **characterized in that** the liquid supply means (21) comprise passages (24) distributed frontally on the said end (4a) of the piston (4) in the manner of a shower head.

6. Device according to one of Claims 1 to 5, **characterized in that** the seal is a lip seal (19) in which the scraper (25) engages in a frontal peripheral recess thereof.

7. Percolation machine (20) provided with the device (1) according to one of Claims 1 to 6.

8. Machine (20) according to Claim 7, **characterized in that** the chamber (9) contains grindings.

9. Method for operating the piston device (1) according to one of Claims 1 to 6 or the machine (20) according to Claim 7 or 8, **characterized in that** at least locally:
- the piston (4) is moved out of the sleeve (3) such that the peripheral seal (19) is no longer compressed by this sleeve (3),
- and hot water is passed towards the seal (19).
